# EUROPEAN PATENT APPLICATION

(11) **EP 4 755 225 A1**
(43) Date of publication of application: **10.06.2026**
(21) Application number: 24218442.2
(22) Date of filing: 09.12.2024
(51) Int. Cl.: A24F 40/50, A24F 40/53, A24F 40/65, H04W 4/80

(54) **AEROSOL-GENERATING SYSTEM AND METHOD**

(71) Applicant: Imperial Tobacco Limited, Bristol BS3 2LL (GB)
(72) Inventor: HYLA, Jan, Bristol, BS3 2LL (GB)
(74) Representative: Mewburn Ellis LLP

(57) **Abstract**

There is provided an aerosol-generating system, the aerosol-generating system having an aerosol locked mode and an aerosol unlocked mode, the aerosol-generating system further having a comms enabled state and a comms disabled state, wherein the aerosol-generating system includes: an aerosol-generating unit for generating aerosol from an aerosol precursor when the aerosol-generating system is in said aerosol unlocked mode, and configured to not generate aerosol when the aerosol-generating system is in said aerosol locked mode; a communication interface configured to be enabled to establish a wireless connection with an external device when the aerosol-generating system is in said comms enabled state, and configured to be disabled when the aerosol-generating system is in said comms disabled state; a controller configured to: cause the aerosol-generating system to transition from the comms disabled state to the comms enabled state in response to detection of a user action involving the aerosol generating device; if the communication interface establishes a wireless connection with the external device, cause the aerosol-generating system to switch from the locked mode to the unlocked mode based on the wireless connection, and cause the aerosol-generating system to transition from the comms enabled state to the comms disabled state.

## Description

### FIELD

The present disclosure relates to an aerosol-generating system and a method relating to an aerosol-generating system.

### BACKGROUND

A typical aerosol-generating system may comprise a power supply, an aerosol-generating unit that is driven by the power supply, an aerosol-forming material, which in use is aerosolised by the aerosol-generating unit to generate an aerosol, and a delivery system for delivery of the aerosol to a user.

Some aerosol-generating systems are lockable to prevent the aerosol-generating unit from generating the aerosol when the aerosol-generating system is locked.

It is against this background that the present invention has been developed.

### SUMMARY

The present disclosure provides an aerosol-generating system having an aerosol locked mode and an aerosol unlocked mode, wherein the aerosol-generating system includes an aerosol-generating unit for generating aerosol from an aerosol-forming material when the aerosol-generating system is in said aerosol unlocked mode, and configured to not generate aerosol when the aerosol-generating system is in said aerosol locked mode.

The aerosol-generating system may have a comms enabled state and a comms disabled state, and may comprise a communication interface configured to be enabled to establish a wireless connection with an external device when the aerosol-generating system is in said comms enabled state, and configured to be disabled when the aerosol-generating system is in said comms disabled state.

The aerosol-generating system may comprise a controller. The controller may be configured to, if the communication interface establishes the wireless connection with the external device, cause the aerosol-generating system to switch from the locked mode to the unlocked mode based on the wireless connection, and cause the aerosol-generating system to transition from the comms enabled state to the comms disabled state.

By causing the aerosol-generating system to switch to the unlocked mode and to transition to the comms disabled state, the aerosol-generating system may be unlocked and the duration in which the aerosol-generating system remains in the comms enabled state. This may reduce power consumption. Additionally or alternatively, tracking of the aerosol-generating system and, by extension, tracking of the user of the aerosol-generating system may be prevented when the communication interface is in the comms disabled state, e.g. such that BLE advertising is disabled where the communication interface utilises BLE (Bluetooth Low Energy).

The controller may be configured to supply reduced power or no power to the communication interface when the aerosol-generating system is in the comms disabled state.

By supplying reduced power or no power to the communication interface, power consumption of the aerosol-generating system may be reduced compared with power consumption of the aerosol-generating system in the comms enabled state. Supply of reduced power may provide for reduced functionality of the communication interface in the comms disabled state, while supply of no power may completely disable the communication interface.

The comms disabled state may be part of a sleep state of the aerosol-generating system according to which further electrical components are supplied reduced power or no power, such as the controller which may be supplied reduced power when the aerosol-generating system is in the sleep state.

In some examples, the controller may be configured to cause the aerosol-generating system to periodically transition from the comms disabled state to the comms enabled state.

By periodically transitioning to the comms enabled state, the aerosol-generating system may be caused to unlock without requiring user intervention. This may be particularly so where the controller is also configured to cause the aerosol-generating system to switch to the unlocked mode in response to having established the wireless connection, as is discussed below.

In some examples, the controller may be configured to cause the aerosol-generating system to transition from the comms disabled state to the comms enabled state in response to detection of a user action involving the aerosol generating device.

By transitioning to the comms enabled state in response to detection of the user action, the comms enabled state may in practice reduce the duration over which the aerosol-generating system remains in the comms enabled state. This may help reduce battery consumption and/or help reduce potential for tracking of the aerosol-generating system. Also, the user may be provided with control over whether to cause the aerosol-generating system to transition to the comms enabled state, and whether to unlock the aerosol-generating system.

The aerosol-generating system may be configured to transition to the comms enabled state only upon detection of the user action.

By transitioning to the comms enabled state only upon detection of the user action this means, conversely, that the aerosol-generating system is configured not to regularly (or continuously) be in the comms enabled state. Thus duration in the comms enabled state may be reduced and be under control of the user.

In some examples, the controller may be configured to cause the aerosol-generating system to switch from the locked mode to the unlocked mode in response to having established the wireless connection. For example, the aerosol-generating system may have been paired with the external device and is configured to be unlocked upon establishing the wireless connection with the paired external device. This is one way in which the controller may be configured to cause the aerosol-generating system to switch from the locked mode to the unlocked mode "based on the wireless connection".

Causing the aerosol-generating system to switch to the unlocked mode in response to having established the wireless connection, the aerosol-generating system may be unlocked effectively automatically. This may provide for a convenient way of unlocking. In this way, the unlocking may not require any application specific to the aerosol-generating system to be running, either in the foreground or the background, by the external device. This may in practice may help further reduce the duration over which the aerosol-generating system is in the comms enabled state.

In some examples, the controller may be configured to cause the aerosol-generating system to switch from the locked mode to the unlocked mode based on the wireless connection in response to having received a first control signal via the wireless connection. This is another way in which the controller may be configured to cause the aerosol-generating system to switch from the locked mode to the unlocked mode "based on the wireless connection".

By causing the aerosol-generating system to switch to the unlocked mode in response to having received the first control signal, the external device (and by extension the user) may be provided with control over whether to unlock the aerosol-generating system. For example, the user may specify whether to unlock the aerosol-generating system using an application running on the external device.

The controller may be configured to, after establishing the wireless connection with the external device, cause the aerosol-generating system to switch from the unlocked mode to the locked mode based on a second control signal received via the wireless connection.

By utilising the first control signal and the second control signal, the aerosol-generating system may be instructed whether to transition to the unlocked mode or to the locked mode. For example, the user may specify whether to unlock or lock the aerosol-generating system using an application running on the external device. This may provide improved flexibility to the user for how to operate the aerosol-generating system. Additionally or alternatively, this may enable the user to reduce potential for misuse of the aerosol-generating system by an unauthorised person attempting to use the aerosol-generating system.

The controller may be configured to, if the communication interface establishes a wireless connection with the external device, determine whether the external device is authorised to communicate with the aerosol-generating system (e.g. based on information stored in an internal memory of the aerosol-generating system), and to cause the aerosol-generating system to switch from the locked mode to the unlocked mode based on the wireless connection only if the controller determines that the external device is authorised to communicate with the aerosol-generating system.

By determining whether the external device is authorised to communicate with the aerosol-generating system, the potential for an unauthorised party to unlock (and, where provided, lock) the aerosol-generating system may be reduced.

In some examples, the external device may be authorised to communicate with the aerosol-generating system by virtue of the user of the external device having verified their identity and successfully passed an age check, and the aerosol-generating system may be paired with the external device conditional thereon.

In some examples, determining whether the external device is authorised to communicate with the aerosol-generating system may involve the aerosol-generating system successfully completing a defined handshake process with the external device within a predetermined time limit (e.g. the "second predetermined time limit" discussed below).

The handshake process may involve the aerosol-generating system receiving information from the external device and authenticating the external device using the received information, e.g. based on information stored in an internal memory of the aerosol-generating system.

The controller may be configured to cause the aerosol-generating system to switch to the unlocked mode based on the wireless connection for a predetermined duration and to switch back to the locked mode upon expiry of the predetermined duration.

The predetermined duration may be 14 days or less. In some examples, the predetermined duration may be 7 days or less. The predetermined duration may be 2 days or less, and may be more than 1 hour. In some examples, the predetermined duration may be 25 hours.

By causing the aerosol-generating system to switch back to the locked mode upon expiry of the predetermined duration, the aerosol-generating system may be prevented from remaining in the unlocked mode if it is left unattended for longer than the predetermined duration. This may further reduce potential for misuse of the aerosol-generating system by an unauthorised person attempting to use the aerosol-generating system.

The controller may be configured to, if the communication interface fails to establish the wireless connection with the external device within a predetermined time limit, cause the aerosol-generating system to transition from the comms enabled state to the comms disabled state.

The predetermined time limit may be measured from transitioning the communication interface from the comms disabled state to the comms enabled state.

The predetermined time limit may be 60 seconds or less. In some examples, the predetermined time limit may be 10 seconds.

By causing the aerosol-generating system to transition back to the comms disabled state upon expiry of the predetermined time limit, the amount of time the aerosol-generating system is in the comms enabled state may be reduced.

In some examples, the predetermined time limit may be resettable or extendable by a user. For example, the predetermined time limit may be reset (or extended) upon detection of any user action involving the aerosol generating device, prior to expiry of the predetermined time limit. For example, the predetermined time limit may be extended (or reset) upon triggering of a pressure sensor of the aerosol-generating device, prior to expiry of the predetermined time limit.

The controller may be configured to, if the communication interface fails to determine that the external device is authorised to communicate with the aerosol-generating system (e.g. based on successful completion of a handshake process, see above) within a second predetermined time limit, cause the aerosol-generating system to transition from the comms enabled state to the comms disabled state.

The second predetermined time limit may be 60 seconds or less. In some examples, the second predetermined time limit may be 10 seconds.

In some examples, the predetermined time limit and the second predetermined time limit may be the same predetermined time limit, in which case the controller may be configured to, if the communication interface fails to establish the wireless connection with the external device OR the communication interface fails to determine that the external device is authorised to communicate with the aerosol-generating system within the predetermined time limit, cause the aerosol-generating system to transition from the comms enabled state to the comms disabled state.

The communication interface may be a BLE module and the wireless connection may be a BLE wireless connection.

The BLE module may be configured to turn on BLE advertising to establish the wireless connection with the external device when the aerosol-generating system is in said comms enabled state.

The communication interface may be an NFC module and the wireless connection may be an NFC wireless connection.

The detected user action may be any one or more of:
- pressing of a button of the aerosol-generating system;
- an inhalation (e.g. as detected using a pressure sensor of the aerosol-generating system);
- connection of an article including aerosol precursor to the aerosol-generating system (e.g. insertion of the article into the aerosol-generating system);
- connection of a charging device to the aerosol-generating system; and
- detection of a predetermined movement of the aerosol-generating system (e.g. using an accelerometer of the aerosol-generating system)

For example, the predetermined movement of the aerosol-generating system may correspond to the user picking up the aerosol-generating system.

The aerosol-generating unit may be configured to aerosolise aerosol-forming material which is a liquid precursor or a gel precursor.

The aerosol-generating unit may be configured to aerosolise aerosol-forming material which is a solid precursor.

There may be provided an aerosol-generating ecosystem including the aerosol-generating system as described above and including the external device.

The aerosol-generating ecosystem may include the article.

The present disclosure also provides a method of unlocking an aerosol-generating system, performed by an aerosol-generating system, wherein the aerosol-generating system has an aerosol locked mode, an aerosol unlocked mode, a comms enabled state and a comms disabled state, and the aerosol-generating system includes a communication interface and a controller; the method including: the controller causing the aerosol-generating apparatus to transition from the comms disabled state to the comms enabled state; establishing a wireless connection with an external device using the communication interface; the controller causing the aerosol-generating apparatus to switch to the aerosol unlocked mode based on the wireless connection; and causing the aerosol-generating apparatus to transition from the comms enabled state to the comms disabled state.

The aerosol-generating system may be the aerosol-generating system as described above.

The present disclosure also provides a method of managing an aerosol-generating system, by the aerosol-generating system, wherein the aerosol-generating system has an aerosol locked mode, an aerosol unlocked mode, a comms enabled state and a comms disabled state, and the aerosol-generating system includes a communication interface and a controller; the method including: the controller causing the aerosol-generating apparatus to transition from the comms disabled state to the comms enabled state; establishing a wireless connection with an external device using the communication interface; receiving a first control signal or a second control signal using the communication interface; the controller causing the aerosol-generating apparatus to switch to the aerosol unlocked mode if the first control signal is received, or causing the aerosol-generating apparatus to switch to the aerosol locked mode if the second control signal is received; and causing the aerosol-generating apparatus to transition from the comms enabled state to the comms disabled state.

The aerosol-generating system may be the aerosol-generating system as described above.

The present disclosure provides a method of managing an aerosol-generating system using an external device, the method including: using the external device to execute an apparatus management application; selecting one of an aerosol locked mode and an aerosol unlocked mode using the apparatus management application; monitoring for a wireless connection with the aerosol-generating system using the apparatus management application; upon detecting the wireless connection with the aerosol-generating system, transmitting a first control signal if the aerosol unlocked mode is selected or transmitting a second control signal if the aerosol locked mode is selected; wherein the first control signal instructs the aerosol-generating system to switch to the aerosol unlocked mode and the second control signal instructs the aerosol-generating system to switch to the aerosol locked mode.

The monitoring for the wireless connection may include periodically searching for BLE advertising of a communication interface of the aerosol-generating system wireless connection with the aerosol-generating system.

The present disclosure provides a computer readable medium comprising instructions which, when executed by a controller of an aerosol-generating system, cause the aerosol-generating system to perform any method as described above.

The preceding summary is provided for purposes of summarizing some examples to provide a basic understanding of aspects of the subject matter described herein. Accordingly, the above-described features should not be construed to narrow the scope of the subject matter described herein in any way. Moreover, the above and/or following examples may be combined in any suitable combination to provide further examples, except where such a combination is clearly impermissible or expressly avoided. Other features, aspects, and advantages of the subject matter described herein will become apparent from the following text and the accompanying figures.

### BRIEF DESCRIPTION OF THE FIGURES

Aspects, features and advantages of the present disclosure will become apparent from the following description of examples in reference to the appended figures in which like numerals denote like elements.
Figure 1 shows an example of an aerosol-generating system;
Figure 2 shows internal components of the aerosol-generating system;
Figure 3 shows an example of an aerosol-generating system;
Figure 4 shows the components of the aerosol-generating system in a 'disengaged state';
Figure 5 shows the components of the aerosol-generating system in an 'engaged state';
Figure 6 shows an ecosystem comprising the aerosol-generating system, an external device, a server, and a charging device.
Figure 7 illustrates a method of unlocking the aerosol-generating system.
Figure 8 illustrates a method of managing the aerosol-generating system, as performed by the aerosol-generating apparatus.
Figure 9 illustrates a method of managing the aerosol-generating system, as performed by the external device.
Figure 10 illustrates a user interface displayed by the external device for use with the method of managing the aerosol-generating system as performed by the external device.

### DETAILED DESCRIPTION OF EMBODIMENTS

It is to be understood that the present disclosure, which includes the specification and claim(s), is not limited by specific construction details or process steps. Rather, it will be clear to those skilled in the art that the systems, apparatuses, and methods described herein can be embodied and practiced in various alternative ways without departing from the scope of the invention.

Unless defined otherwise, scientific and technical terms used herein have their meanings commonly understood by those skilled in the art and that known techniques and procedures may be performed according to conventional methods.

In the present disclosure, the terms "a" and "an" may mean "one", "one or more", "at least one", and "one or more than one" unless the context clearly indicates otherwise. Likewise, plural terms shall include the singular unless otherwise required by context.

In the present disclosure, the term "or" means an inclusive "and/or" unless explicitly indicated to refer to alternatives only or unless the alternatives are mutually exclusive.

In the present disclosure, the terms "comprising, "having," "including," or "containing" (and any forms thereof, such as "comprise" and "comprises," "have" and "has," "includes" and "include," or "contains" and "contain," respectively) are inclusive or open-ended and do not exclude additional, unrecited elements or method steps.

Unless stated otherwise, the features of examples disclosed herein, and of the claims, may be integrated together in any suitable arrangement such that combinations of features are not limited by the described forms, particularly the form (e.g. numbering) of example(s), embodiment(s), or dependency of claim(s). This also applies to the phrase "in one example", "according to an example" and the like, which are merely a stylistic form of wording not to be construed as limiting the features to a separate embodiment. This is to say, a reference to 'an,' 'one,' or 'some' examples(s) may be a reference to any one or more, and/or all examples, or combination(s) thereof, disclosed. Also, similarly, reference to "the" example may not be limited to the immediately preceding embodiment. Further, all references to one or more embodiments or examples are to be construed as non-limiting to the claims. The present disclosure may be better understood in view of the following explanations, wherein the terms used that are separated by "or" may be used interchangeably.

The aerosol generating apparatus may be portable. As used herein, the term **"portable"** may refer to the apparatus being for use when held by a user.

As used herein, **"electrical circuitry"** may refer to one or more electrical components, examples of which may include: an Application Specific Integrated Circuit (ASIC); electronic/electrical componentry (which may include combinations of transistors, resistors, capacitors, inductors etc); one or more processors; a non-transitory memory (e.g. implemented by one or more memory devices), that may store one or more software or firmware programs; a combinational logic circuit; interconnection of the aforesaid. The electrical circuitry may be located entirely at the device, or distributed between the device and/or on one or more external devices in communication with the device, e.g. as part of the system.

As used herein, a **"processing resource"** (or **"processor** " or **"controller")** may refer to one or more units for processing data, examples of which may include an ASIC, microcontroller, FPGA, microprocessor, digital signal processor (DSP) capability, state machine or other suitable component. A processing resource may be configured to execute a computer program, e.g. which may take the form of machine-readable instructions, which may be stored on a non-transitory memory and/or programmable logic. The processing resource may have various arrangements corresponding to those discussed for the circuitry, e.g. on-board and/or off board the device as part of the system. As used herein, any machine executable instructions, or computer readable media, may be configured to cause a disclosed method to be carried out, e.g. by an aerosol-generating system as disclosed herein, and may therefore be used synonymously with the term method.

As used herein, an **"external device"** (or **"peripheral device")** may include one or more electronic components external to an aerosol-generating system. Those components may be arranged at the same location as the device or remote from the device. An external device may comprise electronic computer devices including: a smartphone; a PDA; a video game controller; a tablet; a laptop; or other like device.

As used herein, a **"computer readable medium/media"** (or **"memory"** or **"data storage")** may include any medium capable of storing a computer program, and may take the form of any conventional non-transitory memory, for example one or more of: random access memory (RAM); a CD; a hard drive; a solid state drive; a memory card; a DVD. The memory may have various arrangements corresponding to those discussed for the circuitry /processor. The present disclosure includes a computer readable medium configured to cause a system disclosed herein to perform a method as disclosed herein.

As used herein, a **"communication resource"** (or **"communication interface")** may refer to hardware and/or firmware for electronic information/data transfer. The communication resource may be configured for wired communication ("wired communication resources") or wireless communication ("wireless communication resource"). Wireless communication resources may include hardware to transmit and receive signals by radio and may include various protocol implementations e.g. the 802.11 standard described in the Institute of Electronics Engineers (IEEE) and Bluetooth^{™} from the Bluetooth Special Interest Group of Kirkland Wash. Wired communication resources may include; Universal Serial Bus (USB); High-Definition Multimedia Interface (HDMI) or other protocol implementations. The system may include communication resources for wired or wireless communication with an external device.

As used herein, a **"network"** (or **"computer network")** may refer to a system for electronic information/data transfer between a plurality of apparatuses/devices. The network may, for example, include one or more networks of any type, which may include: a Public Land Mobile Network (PLMN); a telephone network (e.g. a Public Switched Telephone Network (PSTN) and/or a wireless network); a local area network (LAN); a metropolitan area network (MAN); a wide area network (WAN); an Internet Protocol Multimedia Subsystem (IMS) network; a private network; the Internet; an intranet.

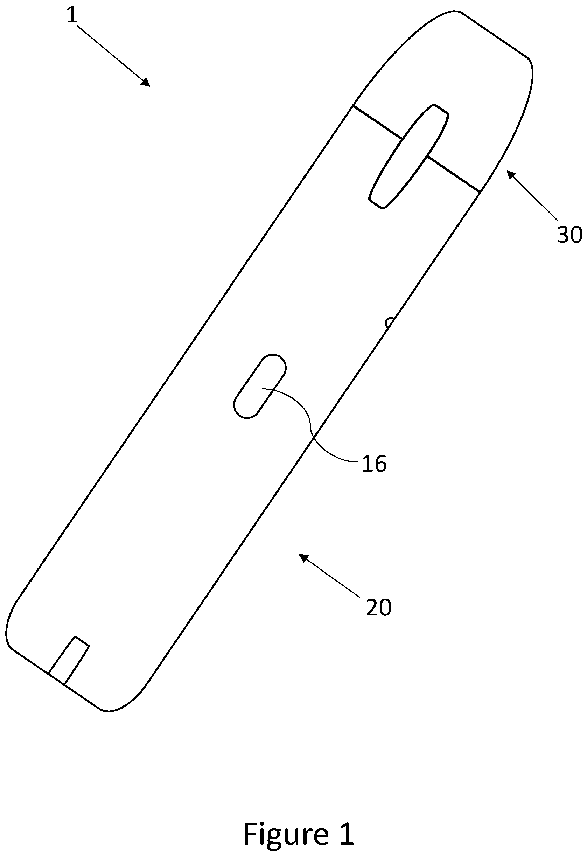

Figure 1 shows an example of an aerosol-generating system 1. In this example, the aerosol-generating system 1 is an electronic vapour product (EVP) configured to produce an aerosol from an aerosol-forming material 10 (e.g. a liquid or gel precursor), although it will be appreciated that the invention may be similarly applicable to a heat-not-burn product (HNB) configured to produce an aerosol from heating an aerosol-forming material (e.g. a solid precursor such as tobacco) to a temperature below its combustion temperature.

The term "aerosol-forming material" refers to a substrate or formulation capable of releasing volatile components that can form an aerosol, e.g. by releasing volatile compounds in the aerosol-forming material. An "aerosol" is a dispersion of solid particles and/or liquid droplets dispersed in a gas. The aerosol may be visible or invisible.

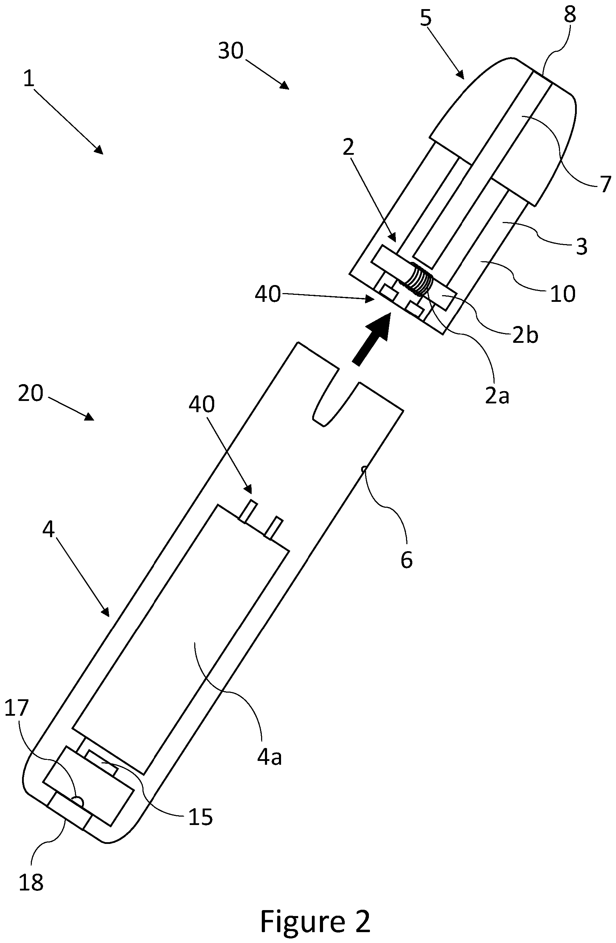

Figure 2 shows a schematic representation of the internal components of the aerosol-generating system 1. The aerosol-generating system 1 comprises an aerosol-generating unit 2 configured to generate an aerosol from an aerosol-forming material 10 held in a storage portion 3 of the aerosol-generating system 1 (implemented here as a "tank"). In this example, the aerosol-generating unit 2 is a heating system including a heating element 2a although it will be appreciated that an aerosol-generating unit comprising an ultrasonic element, atomiser or similar component may be provided. The aerosol-forming material 10 may be referred to as "e-liquid". Typically, the aerosol-forming material 10 includes a base liquid and optionally nicotine and/or flavourings such that the resulting aerosol contains nicotine and/or flavourings.

The aerosol-generating system 1 includes a power source 4. In this example, the power source 4 includes a battery 4a configured to supply electrical energy to operate the aerosol-generating unit 2 and other components. The aerosol-generating system 1 may be powered, alternatively or in addition to the battery 4a, by an external power source. In an alternative example, the power source 4 may be omitted, e.g. an aerosol aerosol-generating unit implemented as an atomiser with flow expansion may not require a power supply.

The aerosol-generating system 1 includes an aerosol-delivery system 5 for delivery of the aerosol to a user. In this example, the aerosol-delivery system 5 comprises an air inlet 6, a mouthpiece 8, and an air passageway 7 extending therebetween via a region in proximity to the aerosol-generating unit 2. The aerosol-generating unit 2 includes a wick 2b having at least one end that extends into the storage portion 3 and is configured to draw aerosol-forming material 10 out from the storage portion 3. In this example, the heating element 2a is in the form of a heating filament wrapped around a portion of the wick 2b. In this manner, the heating element 2a can heat up the aerosol-forming material 10 drawn out of the storage portion 3 by the wick 2b to produce the aerosol, which is then drawn through the air passageway 7 to the mouthpiece 8. In other examples, the heating element 2a may be a mesh heater, ceramic heater, or other means of generating heat. The heating element 2a may be part of an induction heater having a susceptor configured to produce heat when penetrated by an alternating magnetic field.

The aerosol-generating system 1 may be a two-part construction comprising a device body 20 and an article 30 (alternatively referred to as a "pod" or "cartomizer") configured to be releasably connected/disconnected by an end user. The device body 20 and article 30 are each configured to house respective components of the aerosol-generating system 1.

In some examples, the article 30 may be configured to be disposed of upon depletion of aerosol-forming material 10 from the storage portion, in which case the article 30 may referred to as a "consumable". Alternatively, the article 30 may be configured for reuse, such that it is configured to be refillable upon depletion of the aerosol-forming material 10 from the storage portion.

In this example, the device body 20 comprises the power source 4, and the article 30 comprises the aerosol-generating unit 2 and storage portion 3, although it will be appreciated that the device body 20 and article 30 may house any respective set of components. The device body 20 and article 30 are configured to physically interlock to secure the article 30 relative to the device body 20.

Upon connection, electrical connectors 40 of the device body 20 and article 30 may establish an electrical connection between the device body 20 and the article 30. In this way, electrical power can be supplied from the power source 4 to the aerosol-generating unit 2 (or other components of the article 30) without the article 30 needing to have its own power supply.

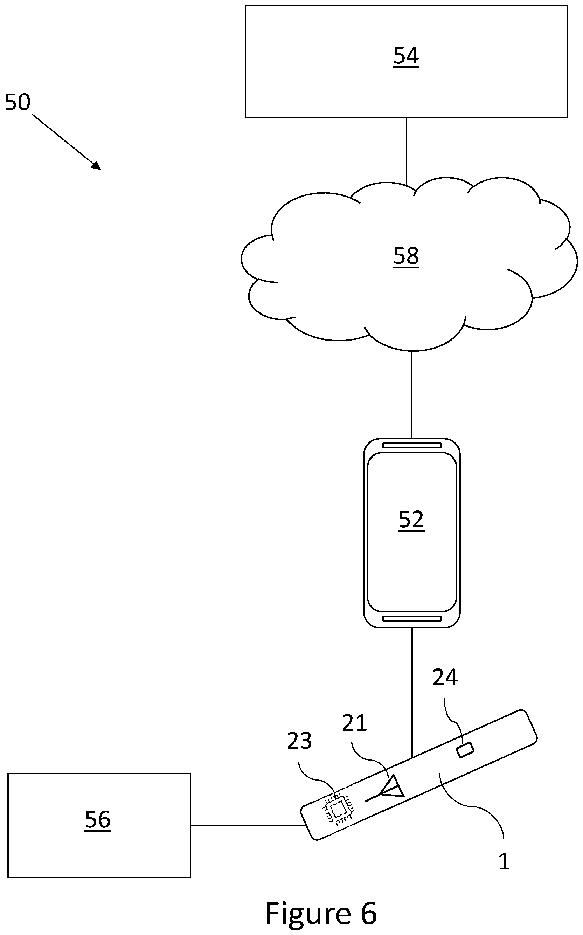

The device body 20 may include any one or more of electrical circuitry, a memory, a wireless communication interface 21 (see Figure 6), and one or more other components. The device body 20 may include a printed circuit board (PCB) 25 on which components of the electrical circuitry, memory, wireless interface, and other components may be mounted.

The electrical circuitry may include a processing resource 23 (see Figure 6) for controlling one or more operations of the body 20 and article 30, e.g. based on instructions stored in the memory. The wireless interface may be configured to communicate wirelessly with an external (e.g. mobile) device, e.g. via Bluetooth, Bluetooth Low Energy, or Near-Field Communication. The other component(s) may include one or more user interface devices configured to convey information to a user, a pressure sensor 15, and/or a charging port 18 (see e.g. figure 2).

The aerosol-generating system 1 may comprise one or more input and/or output elements. In this example, the aerosol-generating system 1 includes an input element in the form of a pressure sensor 15 arranged to detect a "puff" of the user, and particularly the resultant change in air pressure, i.e. a vacuum pressure generated by the user. Alternatively, or in addition, the aerosol-generating system 1 may include other means of detecting airflow, such as a flowmeter or microphone. The user can thereby activate the aerosol-generating unit 2 when inhaling through the mouthpiece 8. The aerosol-generating unit 2 creates an aerosol which is carried by the flow through the air passageway 7 and out of the mouthpiece 8.

Figure 1 shows an input element in the form of a button 16. The button 16 is configured to control activation of the wireless interface 21, as is explained below. It will be appreciated that the input element(s) may be provided in various forms such as touch screens, switches, and sensors.

The input and/or output elements may form part of a user interface (Ul) of the aerosol-generating system 1. For instance, Figure 2 shows an output element in the form of a light (e.g. an LED) 17. The light 17 is configured to convey information to the user regarding the state of the system 1. It will be appreciated that the input element(s) may be provided in various forms, such as touch screens, switches, and sensors, and the output element(s) may be provided in various forms, such as display screens, speakers, or a haptic output generated by a vibration generator.

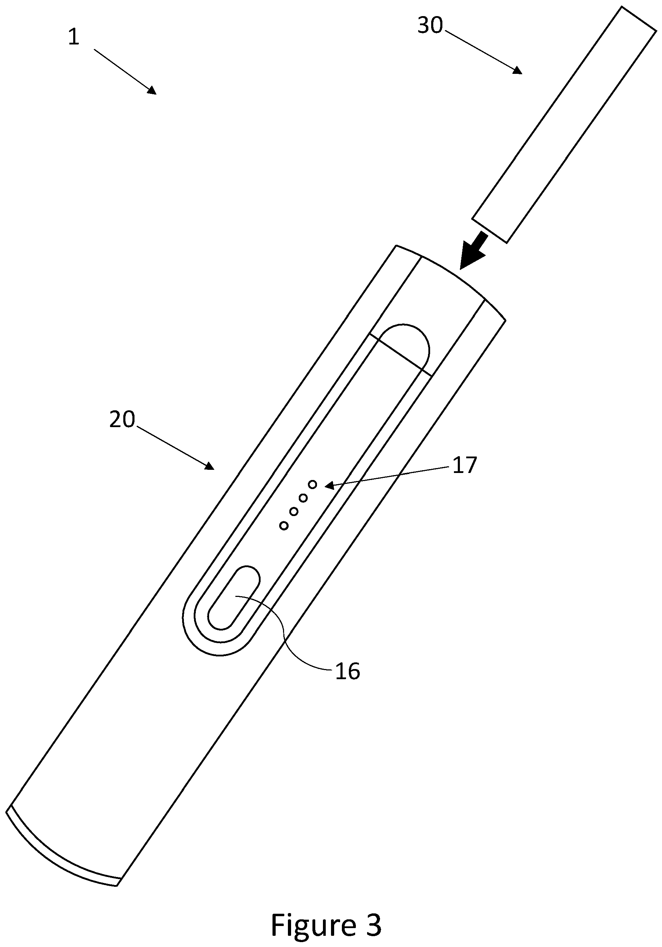

Figure 3 shows an example of an aerosol-generating system 1 comprising a device body 20 and an article 30 (alternatively referred to as a "consumable") for insertion into the device body 20. In this example, the device body 20 is a heat-not-burn device (HNB) configured to produce an aerosol by heating an aerosol-forming material 10 (e.g. a solid precursor, such as tobacco material) to a temperature below its combustion temperature, although it will be appreciated that the invention may be similarly applicable to an electronic vapour product (EVP) configured to produce an aerosol from an aerosol-forming material (e.g. a liquid or gel precursor).

The term "aerosol-forming material" refers to a material capable of releasing volatile components that can form an aerosol, e.g. by releasing volatile compounds in the aerosol-forming material 10. An "aerosol" is a dispersion of solid particles and/or liquid droplets dispersed in a gas. The aerosol may be visible or invisible.

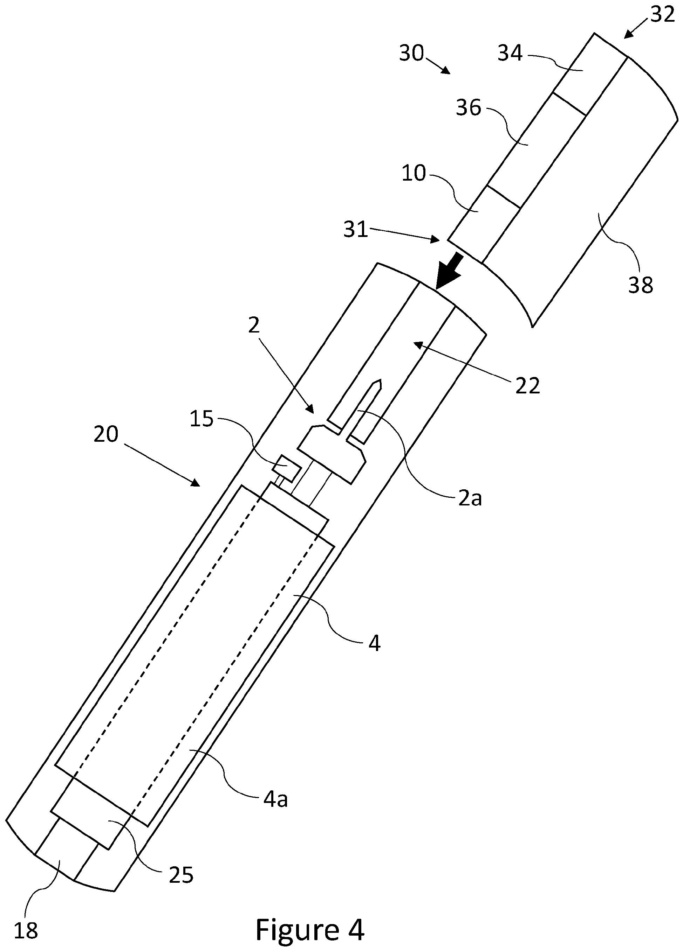

Figure 4 shows a schematic representation of the internal components of the device body 20 and article 30. The device body 20 and article 30 are shown in a "disengaged state" in which the article 30 is separated from the device body 20.

The aerosol-generating system 1 has an aerosol-generating unit 2 in the form of a heating system. The heating system comprises a heating element 2a configured to penetrate the article 30. The heating element 2a heats the aerosol-forming material 10 to a temperature lower than its combustion temperature such that an aerosol can be formed by evaporation, torrefaction and pyrolysis.

The aerosol-generating system 1 includes a power source 4. In this example, the power source 4 includes a battery 4a configured to supply electrical energy to operate the aerosol-generating unit 2 and other components. The aerosol-generating system 1 may be powered, alternatively or in addition to the battery 4a, by an external power source.

The article 30 defines an air passageway which transmits aerosol generated from the aerosol-forming material 10 to a downstream end 32 (i.e. terminal end or mouth end) of the article 30. The article 30 may comprise one or more filter elements 34, one or more spacer elements 36, and one or more wrapping layers 38 (e.g. paper, foil or composite layers). One or more of the filter elements 34 and spacer elements 36 may define the air passageway. In the present example, the article 30 comprises an aerosol-forming material 10 at the upstream end 31 of the article 30, a filter element 34 at the downstream end 32, and a spacer element 36 positioned between them, all circumscribed by a wrapping layer 38.

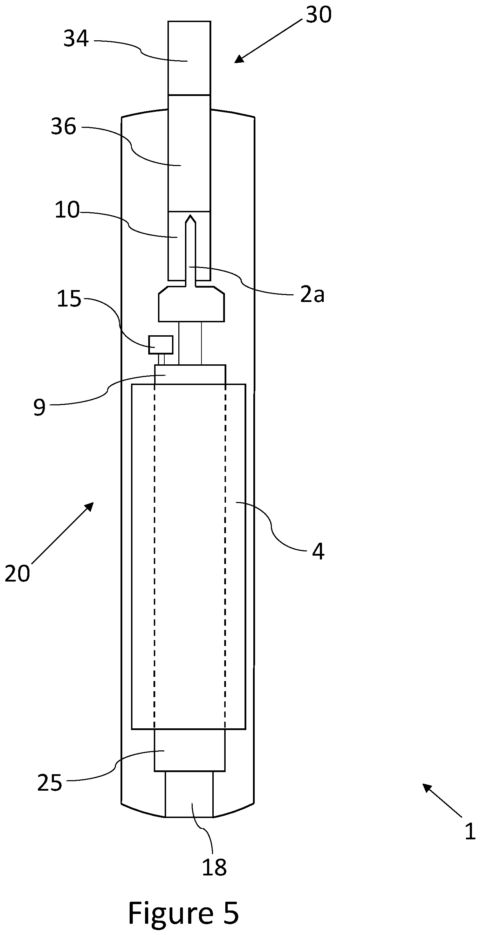

Figure 5 shows the aerosol-generating system 1 in an "engaged state" in which the article 30 is inserted into an internal chamber 22 of the device body 20.

In this example, the heating element 2a is configured to penetrate the article 30. The heating element 2a is arranged to extend along a length of the aerosol-forming material 10 when inserted therein, such that when the heating element 2a is activated, heat is transferred radially outward from the heating element 2a to the aerosol-forming material 10 resulting in formation of an aerosol. This may be referred to as an 'inside-out' heating arrangement. The aerosol is subsequently entrained in an airflow produced by the action of the user drawing on the downstream end 32 of the article 30.

In alternative examples, the heating element 2a may be configured to at least partially encircle the article 30, such that when the heating element 2a is activated, heat is transferred radially inward from the heating element 2a to the aerosol-forming material 10. This may be referred to as an 'outside-in' heating arrangement.

In this example, the heating element 2a is a resistive heating element although it will be appreciated that the aerosol-forming material 10 may be heated by any suitable means. For instance, the heating element 2a may comprise a susceptor (not shown) configured to produce heat when penetrated by an alternating magnetic field.

The device body 20 may include any one or more of electrical circuitry, a memory, a wireless interface 21 (see Figure 6), and one or more other components. The device body 20 may include a printed circuit board (PCB) 25 on which components of the electrical circuitry, memory, wireless interface, and other components may be mounted.

The electrical circuitry may include a processing resource 23 (see Figure 6) for controlling one or more operations of the body 20 and article 30, e.g. based on instructions stored in the memory. The wireless interface may be configured to communicate wirelessly with an external (e.g. mobile) device, e.g. via Bluetooth. The other component(s) may include one or more user interface devices configured to convey information to a user, a pressure sensor 15, and/or a charging port 18.

The aerosol-generating system 1 may comprise one or more input and/or output elements. The input and/or output elements may form part of a user interface (Ul) of the system 1. For instance, Figure 3 shows an input element in the form of a button 16 and an output element in the form of a set of lights (LEDs) 17. The button 16 is configured to control activation of the wireless interface 21, as is explained below. The button 16 is may further be configured to control at least one other function of system 1, such as power supply to the heating element 2a. The lights 17 are configured to convey information to the user regarding the state of the system 1 and/or article. It will be appreciated that the input element(s) may be provided in various forms such as touch screens, switches, and sensors, and the output element(s) may be provided in various forms such as display screens, speakers, or a haptic output generated by a vibration generator.

Figure 6 shows an example of an ecosystem 50 comprising an aerosol-generating system 1, a mobile device 52, an application server 54, and a charging device 56 (which may be provided as a charging station).

In this example, the aerosol-generating system 1 is configured to communicate wirelessly, e.g. via Bluetooth^{™}, with an application (or "app") running on the mobile device 52, via a wireless interface included in the aerosol-generating system 1 and via a wireless interface included in the mobile device 52. The mobile device 52 may be a mobile phone, for example. The application running on the mobile device 52, which may be installed locally, may be configured to communicate with the application server 54, via a network 58. The application server 54 may utilise cloud storage, for example.

The network 58 may include a cellular network and/or the internet.

In other examples, the aerosol-generating system 1 may be configured to communicate with the application server 54 via a connection that does not involve the mobile device 52, e.g. via a narrowband internet of things ("NB-loT") or satellite connection. In some examples, the mobile device 52 may be omitted from the ecosystem 50.

A skilled person would readily appreciate that the mobile device 52 may be configured to communicate via the network 58 according to various communication channels, for instance a wireless communication channel such as via a cellular network (e.g. according to a standard protocol, such as 3G or 4G) or via a WiFi network.

The app installed on the mobile device 52 and the application server 54 may be configured to assist a user with managing the aerosol-generating system 1, based on information communicated between the aerosol-generating system 1 and the app, information communicated directly between the aerosol-generating system 1 and the application server 54, and/or information communicated between the app and the application server 54.

The charging device 56 (if present) may be configured to charge (and optionally communicate with) the aerosol-generating system 1, via a charging port 18 on the aerosol-generating system 1. The charging port 18 on the aerosol-generating system 1 may be a USB port, for example, which may allow the aerosol-generating system 1 to be charged by any USB-compatible device capable of delivering power to the aerosol-generating system 1 via a suitable USB cable (in this case the USB-compatible device would be acting as the charging device 56). Alternatively, the charging device could be a docking station configured to dock with the aerosol-generating system 1 and charge the aerosol-generating system 1 via the charging port 18 on the aerosol-generating system 1.

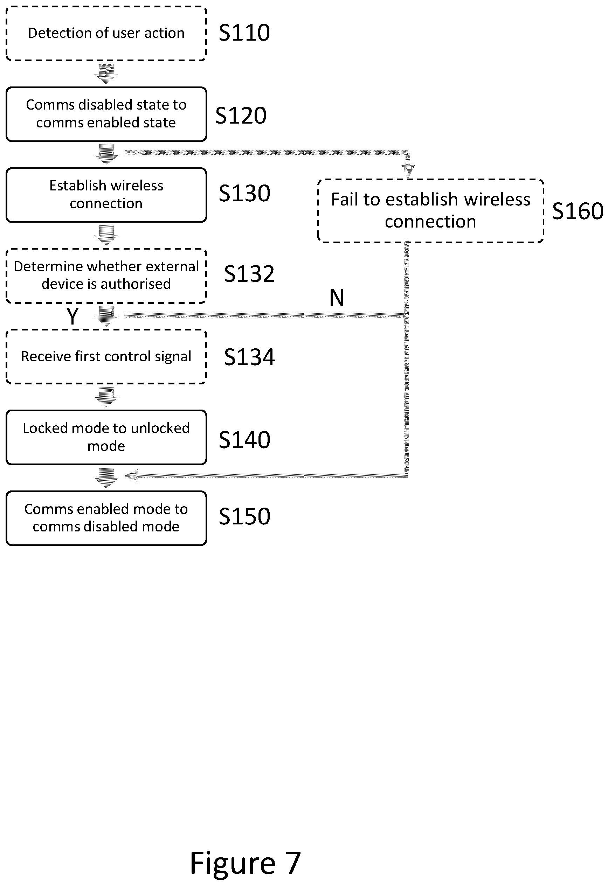

Figure 7 illustrates a method of unlocking the aerosol-generating system 1. The aerosol-generating system 1 has an aerosol locked mode and an aerosol unlocked mode. When the aerosol-generating system is in said aerosol unlocked mode, the aerosol-generating unit 2 is operable to generate aerosol from the aerosol-forming material 10.

When the aerosol-generating system is in said aerosol unlocked mode, the aerosol-generating unit 2 is not operable to generate aerosol from the aerosol-forming material 10. For example, where the aerosol-generating system 1 is an electronic vapour product configured to generate aerosol upon triggering of the pressure sensor 15 when in the aerosol unlocked mode, the aerosol-generating system 1 does not generate aerosol upon triggering of the pressure sensor 15 when in the aerosol locked mode. For example, where the aerosol-generating system 1 comprises a heat-not-burn device configured to generate aerosol upon pressing of the button 16 when in the aerosol unlocked mode, the aerosol-generating system 1 does not generate aerosol upon pressing of the button 16 when in the aerosol locked mode.

The aerosol-generating system 1 has a comms enabled state and a comms disabled state. The communication interface 21 is enabled to establish a wireless connection with the mobile device 52 when the aerosol-generating system is in said comms enabled state, and disabled when the aerosol-generating system 1 is in said comms disabled state.

The aerosol-generating system 1 comprises a controller 23. The controller 23 is configured to control the aerosol-generating system 1 including the aerosol-generating unit 4 and the communication interface 21. In particular, the controller 23 is configured to cause the aerosol-generating system 1 to transition between the comms enabled state and the comms disabled state; and the controller 23 is configured to cause the aerosol-generating system 1 to switch between the aerosol locked mode and the aerosol unlocked mode.

The method of Figure 7 includes a step S110 which includes the controller 23 detecting a user action involving the aerosol-generating system 1. As is outlined below, step S110 is optional.

The detected user action may be any one or more of:
- pressing of the button 16;
- an inhalation (e.g. as detected using the pressure sensor 15);
- insertion of the article 30 into the aerosol-generating system 1;
- connection of charging device 56 to the aerosol-generating system 1;
- detection of a predetermined movement of the aerosol-generating system (e.g. using an accelerometer 24 of the aerosol-generating system 1). For example, the predetermined movement may be multiple taps of the aerosol-generating system 1 or picking up of the aerosol-generating system 1.

In step S120, the controller 23 causes the aerosol-generating system 1 to transition from the comms disabled state to the comms enabled state. In some examples, the controller 23 causes the aerosol-generating system 1 to transition to the comms enabled state in response to detection of the user action. In some examples, the controller 23 is configured to periodically transition to the comms enabled state and, as such, step S110 is optional.

In step S130, the controller 23 controls the communication interface 21 to establish the wireless connection with the mobile device 52.

In an optional step S132, the controller 23 determines whether the external device is authorised to communicate with the aerosol-generating system 1 (e.g. based on information stored to the memory of the aerosol-generating system 1). If it is not determined that the mobile device 52 is authorised (e.g. by successful completion of a handshake process with the mobile device 52 within a predetermined time period), the controller 52 causes the aerosol-generating system 1 to transition back to the comms disabled mode. This outcome is indicated by "N" in Figure 7. Step S132 is considered optional since determining of authorisation may not be needed in all applications or authorisation may be determined using alternative means such as, for example, a control signal (see Step 134 below) may include information based on which the aerosol-generating apparatus 1 may determine that the control signal itself is authorised.

In an optional step S134, the controller 23 receives a first control signal from the mobile device 52 via the communication interface 21. The first control signal includes instructions to the controller 23 to cause the aerosol-generating system 1 to switch to the unlocked mode. Alternatively, the controller 23 may be configured to cause the aerosol-generating system 1 to switch to the unlocked mode automatically upon successfully establishing the wireless connection with the mobile device 52 and, as such, step S134 is optional.

In step S140, the controller 23 causes the aerosol-generating system 1 to switch from the locked mode to the unlocked mode based on the wireless connection. As set out with respect to step S134, this may be based on the first control signal or automatically upon successfully establishing the wireless connection.

The controller 23 is configured to cause the aerosol-generating system 1 to switch to the unlocked mode for a predetermined duration, e.g. 25 hours. Upon expiry of the predetermined duration, the controller 23 is configured to cause the aerosol-generating system 1 to switch back to the locked mode.

In step S150, the controller 23 causes the aerosol-generating system 1 to transition from the comms enabled state to the comms disabled state.

Steps S140 and S150 may be performed in sequence (in either order) or simultaneously.

In an optional step S160, which may follow on from step S120 if failing to establish the wireless connection within a predetermined time limit (which may be the same predetermined time limit referenced in relation to optional step 132, or a different predetermined time limt), e.g. 10 seconds, the controller 23 causes the aerosol-generating system 1 to transition back to the comms disabled state.

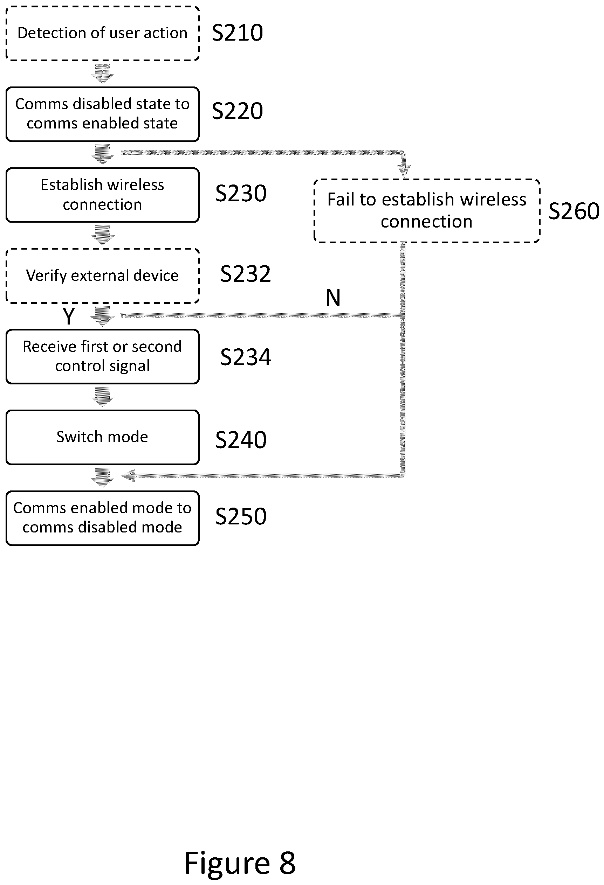

Figure 8 illustrates a method of managing the aerosol-generating system 1. The method of managing the aerosol-generating system 1 is similar to the method discussed with reference to Figure 7 but differs in that the method of Figure 8 allows for selectively locking and unlocking the aerosol-generating apparatus 1.

The method of managing the aerosol-generating system 1 includes an optional step S210 of detecting the user action. This step is equivalent to step S110.

The method of managing the aerosol-generating system 1 includes a step S220 transitioning to the comms enabled state. This step is equivalent to step S120.

The method of managing the aerosol-generating system 1 includes a step S230 of establishing the wireless connection. This step is equivalent to step S130.

The method of managing the aerosol-generating system 1 includes an optional step S232 of verifying the mobile device 52. This step is equivalent to step S132.

The method of managing the aerosol-generating system 1 includes a step S234. In step S234, the controller 23 receives either the first control signal or a second control signal from the mobile device 52 via the communication interface 21. The first control signal includes instructions to the controller 23 to cause the aerosol-generating system 1 to switch to the unlocked mode. The second control signal includes instructions to the controller 23 to cause the aerosol-generating system 1 to switch to the locked mode.

The method of managing the aerosol-generating system 1 includes a step S240. In step S240, the controller 23 causes the aerosol-generating system 1 to switch mode in accordance with the control signal received. That is to say, the controller 23 causes switching from the unlocked mode to the locked mode based on the second control signal; and the controller 23 causes switching from the locked mode to the unlocked mode based on the first control signal.

The method of managing the aerosol-generating system 1 includes a step S250. In step S250, the controller 23 causes the aerosol-generating system 1 to transition from the comms enabled state to the comms disabled state. This step is equivalent to step S150.

The method of managing the aerosol-generating system 1 includes an option step S260. According to step S260, the controller 23 causes the aerosol-generating system to transition to the comms disabled mode if failing to establish the wireless connection. This step is equivalent to step S160.

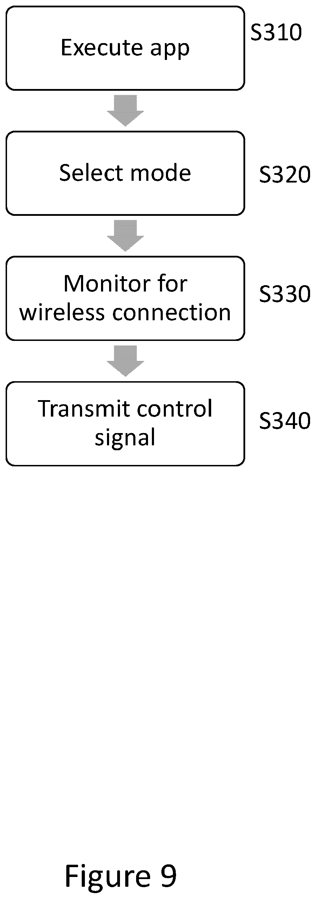

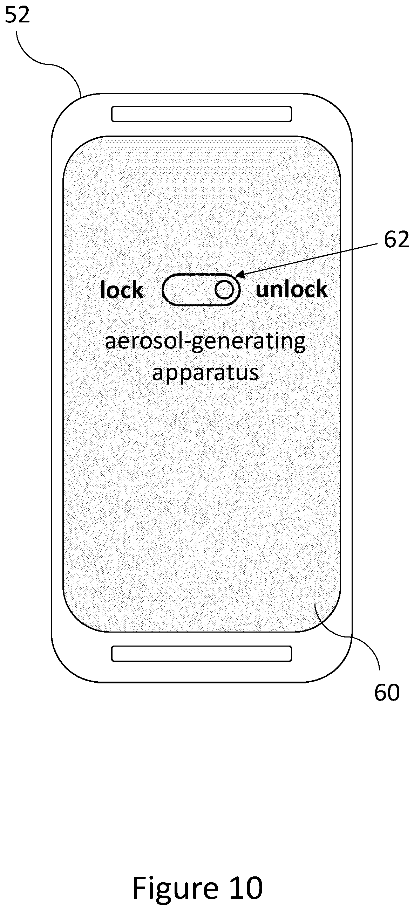

Figures 9 and 10 illustrate a method of managing the aerosol-generating apparatus 1 using the external device 52. Figure 9 is a flowchart showing the method while Figure 10 shows the mobile device 52 displaying an app 60 for selectively locking and unlocking the aerosol-generating system 1.

The method includes a step S310 of executing an apparatus management application 60 (or "app" 60).

The app 60 may be a local app locally stored on the aerosol-generating system 1. The app 60 may be a web app accessed on the server 54 via a web browser.

The method includes a step S320 of selecting the aerosol locked mode or the aerosol unlocked mode using the app 60. Suitably, the user interface 60 may include a toggle switch 62 which is configured to be toggled between "unlock" and "lock" (e.g. as shown in Figure 10).

The method includes a step S330 of monitoring for the wireless connection with the aerosol-generating system 1.

The method includes a step S340 of transmitting a control signal according to the selected mode. If set to "unlock", the mobile device 52 is configured to transmit the first control signal to the aerosol-generating system 1 when the aerosol-generating system 1 establishes the wireless connection with the mobile device 52. If set to "lock", the mobile device 52 is configured to transmit the second control signal to the aerosol-generating system 1 when the aerosol-generating system 1 establishes the wireless connection with the mobile device 52.

Suitably, the app monitors for the aerosol-generating system 1 establishing the wireless connection with the mobile device 52 and, if upon detection of the wireless connection having been established, transmits the respective control signal to the aerosol-generating system 1.

## Claims

1. An aerosol-generating system, the aerosol-generating system having an aerosol locked mode and an aerosol unlocked mode, the aerosol-generating system further having a comms enabled state and a comms disabled state, wherein the aerosol-generating system includes:
an aerosol-generating unit for generating aerosol from an aerosol-forming material when the aerosol-generating system is in said aerosol unlocked mode, and configured to not generate aerosol when the aerosol-generating system is in said aerosol locked mode;
a communication interface configured to be enabled to establish a wireless connection with an external device when the aerosol-generating system is in said comms enabled state, and configured to be disabled when the aerosol-generating system is in said comms disabled state;
a controller configured to:
cause the aerosol-generating system to transition from the comms disabled state to the comms enabled state in response to detection of a user action involving the aerosol generating device; and
if the communication interface establishes the wireless connection with the external device, cause the aerosol-generating system to switch from the locked mode to the unlocked mode based on the wireless connection, and cause the aerosol-generating system to transition from the comms enabled state to the comms disabled state.

2. The aerosol-generating system of claim 1,
wherein the controller is configured to, after establishing the wireless connection with the external device, cause the aerosol-generating system to switch from the locked mode to the unlocked mode based on a first control signal received via the wireless connection.

3. The aerosol-generating system of claim 2,
wherein the controller is configured to, after establishing the wireless connection with the external device, cause the aerosol-generating system to switch from the unlocked mode to the locked mode based on a second control signal received via the wireless connection.

4. The aerosol-generating system of any preceding claim,
wherein the controller is configured to, if the communication interface establishes a wireless connection with the external device, determine whether the external device is authorised to communicate with the aerosol-generating system, and to cause the aerosol-generating system to switch from the locked mode to the unlocked mode based on the wireless connection only if the controller determines that the external device is authorised to communicate with the aerosol-generating system.

5. The aerosol-generating system of any previous claim,
wherein the controller is configured to cause the aerosol-generating system to switch to the unlocked mode based on the wireless connection for a predetermined duration and to switch back to the locked mode upon expiry of the predetermined duration.

6. The aerosol-generating system of any preceding claim,
wherein the controller is configured to, if the communication interface fails to establish the wireless connection with the external device within a predetermined time limit from transitioning the communication interface from the comms disabled state to the comms enabled state, cause the aerosol-generating system to transition from the comms enabled state to the comms disabled state.

7. The aerosol-generating system of any preceding claim,
wherein the controller is configured to supply reduced power or no power to the communication interface when the aerosol-generating system is in the comms disabled state.

8. The aerosol-generating system of any preceding claim,
wherein the communication interface is a BLE module and the wireless connection is a BLE wireless connection; and
wherein the BLE module is configured to turn on BLE advertising to establish the wireless connection with the external device when the aerosol-generating system is in said comms enabled state.

9. The aerosol-generating system of any one of claims 1 to 7,
wherein the communication interface is an NFC module and the wireless connection is an NFC wireless connection.

10. The aerosol-generating system of any preceding claim,
wherein the aerosol-generating system is configured to transition to the comms enabled state only upon detection of the user action.

11. The aerosol-generating system of any preceding claim,
wherein the detected user action is any one or more of:
- pressing of a button of the aerosol-generating system;
- an inhalation;
- connection of an article including aerosol precursor to the aerosol-generating system;
- connection of a charging device to the aerosol-generating system; and
- detection of a predetermined movement of the aerosol-generating system.

12. The aerosol-generating system of any preceding claim,
wherein the aerosol-generating unit is configured to aerosolise aerosol-forming material which is liquid or gel.

13. An aerosol-generating ecosystem including the aerosol-generating system of any preceding claim and including the external device.

14. A method of managing an aerosol-generating system using an external device, the method including:
using the external device to execute an apparatus management application;
selecting one of an aerosol locked mode and an aerosol unlocked mode using the apparatus management application;
monitoring for a wireless connection with the aerosol-generating system using the apparatus management application;
upon detecting the wireless connection with the aerosol-generating system, transmitting a first control signal if the aerosol unlocked mode is selected or transmitting a second control signal if the aerosol locked mode is selected;
wherein the first control signal instructs the aerosol-generating system to switch to the aerosol unlocked mode and the second control signal instructs the aerosol-generating system to switch to the aerosol locked mode.

15. The method of claim 14,
wherein monitoring for the wireless connection includes periodically searching for BLE advertising of a communication interface of the aerosol-generating system wireless connection with the aerosol-generating system.
